# EUROPÄISCHE PATENTANMELDUNG

(11) **EP 0 546 384 A1**
(43) Veröffentlichungstag der Anmeldung: **16.06.1993**
(21) Anmeldenummer: 92120152.1
(22) Anmeldetag: 26.11.1992
(51) Int. Cl.: B60K 37/00, B60R 7/06

(54) **Armaturentafel**

(30) Priorität: 12.12.1991 DE 9115431 U
(71) Anmelder: MAN Nutzfahrzeuge Aktiengesellschaft, 80976 München (DE)
(72) Erfinder: Hinderhofer, Jürgen, W-8000 München 2 (DE); Kraus, Wolfgang, Prof. Dipl.-Designer, W-8000 München 50 (DE)

(57) **Zusammenfassung**

Die Erfindung betrifft eine Armaturentafel (1) im Fahrerhaus von Nutzfahrzeugen. Auf dem Deck (2) der Armaturentafel (1) ist ein Kastenset (3) angeordnet, das einteilig und mehrteilig sein kann, wie auch austauschbar. Auch Zusatzgeräte (4), wie zum Beispiel ein Travel Pilot, sind auf dem Deck installierbar.

## Beschreibung

Die Neuerung betrifft eine Armaturentafel im Fahrerhaus von Nutzfahrzeugen. Der Neuerung liegt die Aufgabe zugrunde, die Fahrerhausorganisation, auch unter ästhetischen Gesichtspunkten, zu verbessern.

Dies wird neuerungsgemäß durch die kompakte Integrierung eines Ablagesystems in Zuordnung zu den konventionellen Elementen einer Armaturentafel mit einem dem Deck der Armaturentafel aufsetzbaren Kastenset und/oder Zusatzgeräten, wie zum Beispiel einem Travel Pilot und mit unter der Armaturentafel angeordneten Staukästen erreicht. Solcherart ist es für den Fahrer und Beifahrer leicht möglich, Schriftstücke einerseits abzulegen und andererseits in kurzem Zugriff zur Verfügung zu haben.

In Ausgestaltung der Neuerung ist der Kastenset mehrteilig und austauschbar. Auf diese Weise kann den individuellen Gegebenheiten in Lastkraftwagen Rechnung getragen werden.

Ein weiteres Merkmal der Neuerung ist, daß unterhalb des Armaturenbrettes Staukästen angebracht sind, wovon zumindest einer als Schnellhefter-Steckfach ausgebildet ist. Auch hier ist ein schneller Zugriff zu aktenmäßig geordneten Schriftstücken schnell möglich.

Die Armaturentafel in der neuerungsgemäß gewählten Konfiguration bildet auch in ihrer Geschlossenheit ein ästhetisch ansprechendes Bild.

Die Neuerung ist in einem Ausführungsbeispiel dargestellt und beschrieben.

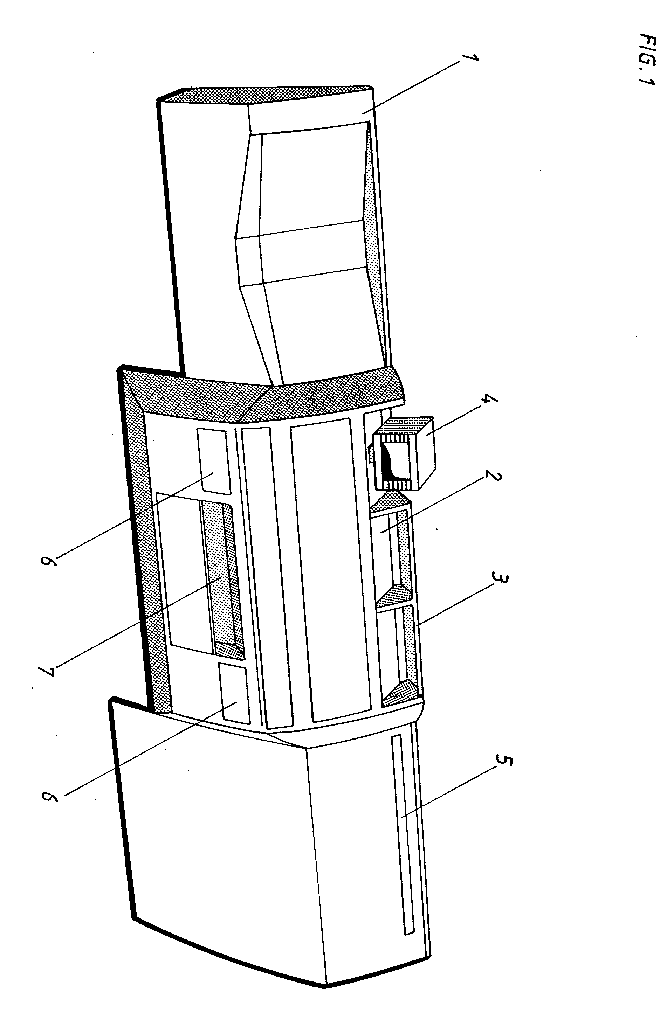

Die einzige Figur zeigt eine komplette Armaturentafel mit Zusatzeinrichtungen.

Auf dem Deck 2 der Armaturentafel 1 ist ein Kastenset 3 angeordnet, das einteilig und mehrteilig sein kann, wie auch austauschbar. Auch Zusatzgeräte 4, wie zum Beispiel ein Travel Pilot, sind auf dem Deck 2 installierbar. Unterhalb der Armaturentafel 1 sind Staukästen 6 angeordnet, wovon mindestens einer als Schnellhefter-Steckfach 7 ausgebildet sein kann. Staukästen 6 können wahlweise als Aschereinsatz ausgebildet sein.

### Bezugszeichenliste

- 1: Armaturentafel
- 2: Deck von 1
- 3: Kastenset
- 4: Zusatzgeräte, z.B. Travelpilot
- 5: Magnetleiste
- 6: Staukästen
- 7: Schnellhefter-Steckfach

## Patentansprüche

1. Armaturentafel im Fahrerhaus von Nutzfahrzeugen, gekennzeichnet durch die kompakte Integrierung eines Ablagesystems in Zuordnung zu den konventionellen Elementen einer Armaturentafel mit einem das Deck (2) der Armaturentafel (1) aufsetzbaren Kastenset (3) und/oder Zusatzgeräten (4), wie zum Beispiel einen Travel Pilot und mit unter der Armaturentafel (1) angeordneten Staukästen (6).

2. Armaturentafel nach Anspruch 1, dadurch gekennzeichnet, daß der Kastenset (3) mehrteilig und austauschbar ist.

3. Armaturentafel nach Anspruch 1 oder 2, dadurch gekennzeichnet, daß im Kastenset (3) eine Magnetleiste (5) vorgesehen ist.

4. Armaturentafel nach den Ansprüchen 1 bis 3, dadurch gekennzeichnet, daß ein Staukasten (6) als Schnellhefter-Steckfach (7) ausgebildet ist.
